# EUROPEAN PATENT APPLICATION

(11) **EP 4 183 754 A1**
(43) Date of publication of application: **24.05.2023**
(21) Application number: 21842293.9
(22) Date of filing: 14.07.2021
(51) Int. Cl.: C03C 17/25, B32B 17/06, C03C 17/36

(54) **GLASS SUBSTRATE WITH SILICA FILM**

(30) Priority: 17.07.2020 JP 2020123193
(71) Applicant: AGC INC., Chiyoda-ku, Tokyo 1008405 (JP); AGC Glass Europe, 1348 Louvain-La-Neuve (BE); AGC Flat Glass North America, Inc., Alpharetta, GA 30022 (US); AGC Vidros do Brasil Ltda., Sao Paulo, CEP 12523-671 (BR)
(72) Inventor: MORI, Kazutomo, Tokyo 100-8405 (JP); WATANABE, Soshi, Tokyo 100-8405 (JP); YAOITA, Kazuya, Tokyo 100-8405 (JP); HOSOO, Shohei, Iwaki-shi, Fukushima 973-8411 (JP)
(74) Representative: Müller-Boré & Partner Patentanwälte PartG mbB
(86) International application number: PCT/JP2021/026520
(87) International publication number: WO 2022/014650

(57) **Abstract**

A glass substrate with a silica film according to the present invention has a silica film that is formed using a silica-film-forming composition, in which the composition comprises a hydrolysable compound or the like and silica particles/zirconia particles, the hydrolyzable compound comprises only a tetraalkoxysilane, a compound represented by formula I: (R₃₋ₚ(L)ₚSi-Q-Si(L)ₚR₃₋ₚ) (compound I), a fluoroalkylsilane having a hydrolysable group which is used optionally and a zirconium compound having a hydrolyzable group which is used optionally, and the contents of the tetraalkoxysilane, the compound I, and the silica particles/zirconia particles in terms of SiO₂/ZrO₂ content fall within specified ranges, respectively.

## Description

### TECHNICAL FIELD

The present invention relates to a glass substrate with a silica film.

### BACKGROUND ART

A method of forming a film on a surface of a glass substrate for the purpose of protecting the glass substrate and imparting desired functions is known.

For example, Patent Literature 1 discloses a method for forming a functional film on the surface of a glass substrate, including coating the surface of a chemically strengthened glass sheet with a coating liquid containing a silica precursor such as a tetraalkoxysilane and a bis(trimethoxysilyl)alkane, silica particles, and a solvent, and drying the surface.

### CITATION LIST

### PATENT LITERATURE

Patent Literature 1: WO 2015/186753

### SUMMARY OF INVENTION

### TECHNICAL PROBLEM

In recent years, there has been a demand for further improvement in the performance of films disposed on the surface of the glass substrate, and for example, a film having excellent alkali resistance and wear resistance has been demanded.

The present inventors have found that when the coating liquid described in Patent Literature 1 is used to form a film on the glass substrate, the wear resistance of the film is excellent, but the alkali resistance has room for improvement.

Therefore, an object of the present invention is to provide a glass substrate with a silica film having excellent alkali resistance and wear resistance.

### SOLUTION TO PROBLEM

As a result of intensive examination of the above problems, the present inventors have found that in the case where a silica film-forming composition having a content of a tetraalkoxysilane in terms of SiOz, a content of a compound represented by Formula I in terms of SiO₂, and a content of at least one kind selected from the group consisting of a silica particle and a zirconia particle in terms of SiO₂, in terms of ZrO₂, or in terms of SiO₂ and ZrO₂ each within a predetermined range is used, a glass substrate with a silica film having excellent alkali resistance and wear resistance can be obtained and have come up with the present invention.

Namely, the present inventors have found that the above problems can be solved by the following configurations.
[1] A glass substrate with a silica film including:
   a glass substrate; and
   a silica film disposed on the glass substrate and formed using a silica film-forming composition, in which
   the silica film-forming composition includes at least one kind selected from the group consisting of a hydrolyzable compound, a hydrolyzate thereof, and a hydrolysis condensation compound thereof, and at least one kind selected from the group consisting of a silica particle and a zirconia particle,
   the hydrolyzable compound consisting of a tetraalkoxysilane, a compound represented by Formula I, optionally a fluoroalkylsilane having a hydrolyzable group, and optionally a zirconium compound having a hydrolyzable group,
   a content of the tetraalkoxysilane in terms of SiO₂ is from 2 mass% to 35 mass% with respect to a total content of the content of the tetraalkoxysilane in terms of SiO₂, a content of the compound represented by Formula I in terms of SiO₂, and a content of the at least one kind selected from the group consisting of a silica particle and a zirconia particle in terms of SiO₂, in terms of ZrO₂, or in terms of SiO₂ and ZrO₂,
   the content of the compound represented by Formula I in terms of SiO₂ is from 15 mass% to 88 mass% with respect to the total content of the content of the tetraalkoxysilane in terms of SiO₂, the content of the compound represented by Formula I in terms of SiOz, and the content of the at least one kind selected from the group consisting of a silica particle and a zirconia particle in terms of SiO₂, in terms of ZrO₂, or in terms of SiO₂ and ZrO₂, and
   the content of the at least one kind selected from the group consisting of a silica particle and a zirconia particle in terms of SiO₂, in terms of ZrO₂, or in terms of SiO₂ and ZrO₂ is from 10 mass% to 60 mass% with respect to the total content of the content of the tetraalkoxysilane in terms of SiO₂, the content of the compound represented by Formula I in terms of SiO₂, and the content of the at least one kind selected from the group consisting of a silica particle and a zirconia particle in terms of SiO₂, in terms of ZrO₂, or in terms of SiO₂ and ZrO₂,

      R₃₋ₚ(L)ₚSi-Q-Si(L)pR₃₋ₚ Formula I

      in Formula I,
      R is a hydrogen atom or a monovalent hydrocarbon group optionally having one or more groups selected from the group consisting of -O-, -S-, -C(O)- and -N(R¹)- between carbon atoms, and R¹ is a hydrogen atom or a monovalent hydrocarbon group,
      L is a hydrolyzable group,
      Q is a divalent hydrocarbon group having from 2 to 6 carbon atoms and optionally having one or more groups selected from the group consisting of -O-, -S-, -C(O)- and -N(R²)- between carbon atoms, and R² is a hydrogen atom or a monovalent hydrocarbon group, and
      p is an integer of from 1 to 3.
[2] The glass substrate with a silica film according to [1], in which the content of the compound represented by Formula I in terms of SiO₂ is from 30 mass% to 50 mass% with respect to the total content of the content of the tetraalkoxysilane in terms of SiO₂, the content of the compound represented by Formula I in terms of SiO₂, and the content of the at least one kind selected from the group consisting of a silica particle and a zirconia particle in terms of SiO₂, in terms of ZrO₂, or in terms of SiO₂ and ZrO₂.
[3] The glass substrate with a silica film according to [1] or [2], in which the silica film-forming composition further includes a metal catalyst.
[4] The glass substrate with a silica film according to any one of [1] to [3], further including:
   a heat ray reflection film between the glass substrate and the silica film.
[5] The glass substrate with a silica film according to [4], in which
   the heat ray reflection film includes a silver-containing layer and an upper layer consisting of all layers disposed closer to the silica film than the silver-containing layer, and
   a ratio of a thickness of the silica film to a thickness of the upper layer is from 0.5 to 30.

### ADVANTAGEOUS EFFECTS OF INVENTION

According to the present invention, it is possible to provide a glass substrate with a silica film having excellent alkali resistance and wear resistance.

### BRIEF DESCRIPTION OF DRAWINGS

[FIG. 1] FIG. 1 is a cross-sectional view schematically illustrating an example of the glass substrate with a silica film according to the present invention.
[FIG. 2] FIG. 2 is a cross-sectional view schematically illustrating an example of the glass substrate with a silica film according to the present invention.
[FIG. 3] FIG. 3 is a cross-sectional view schematically illustrating an example of the glass substrate with a silica film according to the present invention.

### DESCRIPTION OF EMBODIMENTS

Terms used in the present invention have the following meanings.

A numerical range expressed by using "to" means a range including numerical values described before and after "to" as a lower limit value and an upper limit value.

The term "content in terms of SiO₂" means a mass when all silicon atoms contained in a compound are converted to SiO₂.

For example, since tetraethoxysilane includes one silicon atom, the content in terms of SiO₂ in 100 g of tetraethoxysilane (molecular weight: 208.33) is 29.2 g when calculated based on the molecular weight of one SiO₂ (60.8).

In addition, since 1,6-bis(trimethoxysilyl)hexane includes two silicon atoms, the content in terms of SiO₂ in 100 g of 1,6-bis(trimethoxysilyl)hexane (molecular weight: 326.5) is 37.3 g when calculated based on the molecular weights of two SiO₂ (60.8 × 2).

The term "content in terms of ZrO₂" means a mass when all zirconium atoms contained in a compound are converted to ZrO₂.

### [Glass Substrate with a Silica Film]

The glass substrate with a silica film according to the present invention includes: a glass substrate; and a silica film disposed on the glass substrate and formed using a silica film-forming composition.

The silica film-forming composition includes at least one kind selected from the group consisting of a hydrolyzable compound, a hydrolyzate thereof, and a hydrolysis condensation compound thereof, and at least one selected from the group consisting of a silica particle and a zirconia particle.

The hydrolyzable compound consisting of a tetraalkoxysilane, a compound represented by Formula I to be described later (hereinafter, also referred to as a "compound I"), optionally a fluoroalkylsilane having a hydrolyzable group, and optionally a zirconium compound having a hydrolyzable group.

A content of the tetraalkoxysilane in terms of SiOz, a content of the compound I in terms of SiO₂, and a content of the at least one kind selected from the group consisting of a silica particle and a zirconia particle in terms of SiOz, in terms of ZrO₂, or in terms of SiO₂ and ZrO₂ are respectively from 2 mass% to 35 mass%, from 15 mass% to 88 mass%, and from 10 mass% to 60 mass%, with respect to the total content of the content of the tetraalkoxysilane in terms of SiO₂, the content of the compound I in terms of SiO₂, and the content of the at least one kind selected from the group consisting of a silica particle and a zirconia particle in terms of SiO₂, in terms of ZrO₂, or in terms of SiO₂ and ZrO₂.

That is, the contents of the tetraalkoxysilane, the compound I, and the silica particle and/or the zirconia particle in terms of SiO₂ and/or in terms of ZrO₂ are respectively from 2 mass% to 35 mass%, from 15 mass% to 88 mass%, and from 10 mass% to 60 mass%, with respect to the total content of the tetraalkoxysilane, the compound I, and the silica particle and/or the zirconia particle in terms of SiO₂ and/or in terms of ZrO₂.

The glass substrate with a silica film according to the present invention has excellent alkali resistance and wear resistance. Although details of the reason have not been clarified yet, it is presumed that the reason is generally as follows.

The silica film-forming composition in the present invention has a content of the tetraalkoxysilane in terms of SiO₂ within a predetermined range. Accordingly, it is presumed that the hardness of the silica film is improved, and the glass substrate with a silica film having excellent wear resistance is obtained.

In addition, the silica film-forming composition according to the present invention has a content (in terms of SiO₂) of the compound I higher than that of the composition in Patent Literature 1. Thus, in the case where the content of the compound I in the silica film-forming composition is high, a silica film containing many carbon-carbon atoms bonds derived from "Q" in Formula I is obtained. It is presumed that the alkali resistance of the silica film is improved since the carbon-carbon atoms bond is less likely to be broken by the action of alkali than a silicon-oxygen atoms bond.

In addition, it is presumed that the carbon-carbon atoms bond derived from "Q" in Formula I plays a role in blocking fine holes formed in the silica film, thereby preventing intrusion of ions and improving the alkali resistance of the silica film. The fine holes are formed by volatilization of the residual solvent or a hydrolysis condensation reaction.

Further, the glass substrate with a silica film according to the present invention also has excellent salt water resistance. Although the details of the reason for this have not been clarified, it is presumed to be the same as the reason for the excellent alkali resistance described above.

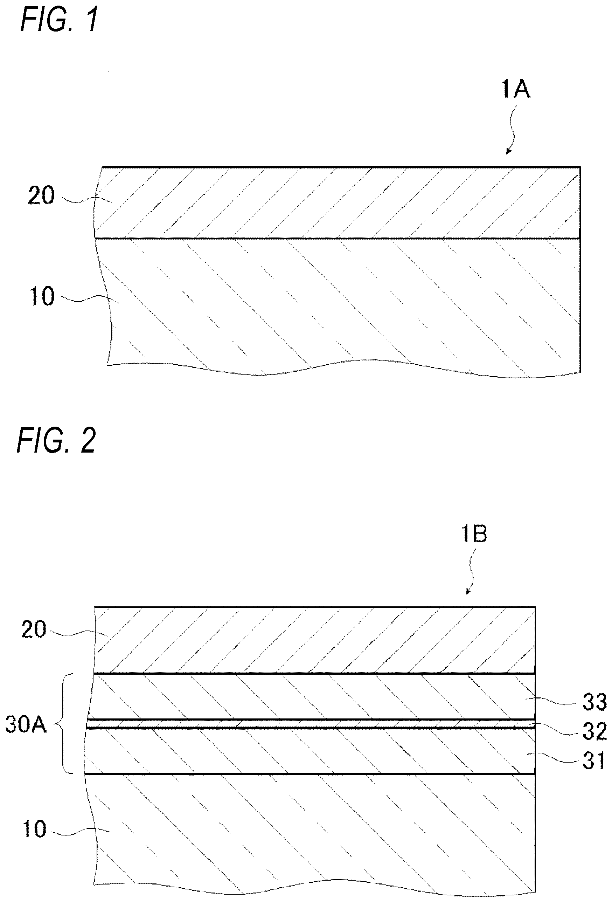

FIG. 1 is a cross-sectional view schematically illustrating an example of the glass substrate with a silica film according to the present invention. A glass substrate with a silica film 1A includes a glass substrate 10, and a silica film 20 formed on one surface of the glass substrate 10.

In the example shown in FIG. 1, the silica film 20 is formed on the entire one surface of the glass substrate 10, but the present invention is not limited to this. The silica film 20 may be formed only on a partial region of the glass substrate 10.

In the example shown in FIG. 1, the silica film 20 is formed only on one surface of the glass substrate 10, but the present invention is not limited to this. The silica film 20 may be formed on both surfaces of the glass substrate 10.

In the following, each member included in the glass substrate with a silica film 1A will be described.

### [Glass Substrate]

The glass substrate 10 is not particularly limited, and examples thereof include a soda lime glass, an aluminosilicate glass, a lithium glass, and a borosilicate glass. The glass substrate 10 may be a chemically strengthened glass.

The glass substrate 10 may be a glass sheet having a smooth surface formed by a float method or the like, a patterned glass sheet having an uneven surface, or a glass sheet having a curved shape.

The thickness of the glass substrate 10 is appropriately selected depending on the application and is not particularly limited, and is preferably from 0.5 mm to 20 mm.

### [Silica Film]

The silica film 20 is formed using the silica film-forming composition to be described later, and includes at least one kind selected from the group consisting of a hydrolyzable compound, a hydrolyzate thereof, and a hydrolysis condensation compound thereof, and at least one kind selected from the group consisting of a silica particle and a zirconia particle.

The thickness of the silica film 20 is preferably from 10 nm to 1000 nm, more preferably from 20 nm to 500 nm, and particularly preferably from 30 nm to 200 nm, from the viewpoint of more excellent effects of the present invention.

The thickness of the silica film 20 is measured by the method described in Examples below.

Specific examples of applications of the silica film 20 include an antiglare film, a low reflection film, and a protective film (for example, an anti-scratch film, an alkali barrier film, an anti-corrosion film for glass, and an antifouling film).

### <Silica Film-forming Composition>

The silica film-forming composition includes at least one kind selected from the group consisting of a hydrolyzable compound, a hydrolyzate thereof, and a hydrolysis condensation compound thereof (hereinafter, simply referred to as "hydrolyzable compounds"), and at least one kind selected from the group consisting of a silica particle and a zirconia particle.

The hydrolyzable compound consists of a tetraalkoxysilane, a compound I, optionally a fluoroalkylsilane having a hydrolyzable group, and optionally a zirconium compound having a hydrolyzable group.

### (Hydrolyzable Compounds)

Specific examples of the tetraalkoxysilane include tetramethoxysilane, tetraethoxysilane, tetrapropoxysilane, tetraisopropoxysilane, and tetrabutoxysilane.

The tetraalkoxysilane may be used alone or in a combination of two or more kinds thereof.

The compound I is a compound represented by Formula I below.

R₃₋ₚ(L)ₚSi-Q-Si(L)pR₃₋ₚ Formula I

In Formula I, R is a hydrogen atom or a monovalent hydrocarbon group.

Specific examples of the monovalent hydrocarbon group include an alkyl group, an alkenyl group, and an aryl group. The alkyl group may be linear, branched or cyclic.

The number of carbon atoms in the monovalent hydrocarbon group is preferably from 1 to 10, and more preferably from 1 to 6.

The monovalent hydrocarbon group may have one or more groups selected from the group consisting of -O-, -S-,-C(O)- and -N(R¹)- between carbon-carbon atoms. R¹ is a hydrogen atom or a monovalent hydrocarbon group.

In Formula I, in the case where there is two or more Rs, the two or more Rs may be the same as or different from each other.

In Formula I, L is a hydrolyzable group.

The hydrolyzable group is a reactive group that causes a decomposition/condensation reaction upon contact with water.

Specific examples of the hydrolyzable group include an alkoxy group, an acyloxy group, a ketoxime group, an alkenyloxy group, an amino group, an aminoxy group, an amide group, an isocyanate group, and a halogen atom. Among these, an alkoxy group, an isocyanate group, and a halogen atom (especially a chlorine atom) are preferred from the viewpoint of the balance between the stability and the easiness of hydrolysis of the compound I.

The alkoxy group is preferably an alkoxy group having from 1 to 3 carbon atoms, and particularly preferably a methoxy group or an ethoxy group.

In Formula I, the two or more Ls may the same as or different from each other.

Q is a divalent hydrocarbon group having from 2 to 6 carbon atoms.

Examples of the divalent hydrocarbon group include an alkylene group, an alkenylene group, and an arylene group, and an alkylene group is preferred. The alkylene group may be linear, branched or cyclic.

The divalent hydrocarbon group may have one or more groups selected from the group consisting of -O-, -S-, - C(O)- and -N(R²)- between carbon-carbon atoms. R² is a hydrogen atom or a monovalent hydrocarbon group.

p is an integer of from 1 to 3, preferably 2 or 3, and particularly preferably 3, from the viewpoint of a reaction rate.

The compound I may be used alone or in a combination of two or more kinds thereof.

The fluoroalkylsilane having a hydrolyzable group is a component optionally used as the hydrolyzable compound. The use of the fluoroalkylsilane having a hydrolyzable group further improves the wear resistance of the glass substrate with a silica film.

The fluoroalkylsilane having a hydrolyzable group is preferably a compound represented by Formula II from the viewpoint of more excellent effects of the present invention.

R^{F}-Q¹⁰-Si(L¹⁰)ₚ₁R¹⁰₃₋ₚ₁ Formula II

In Formula II, R^{F} is a fluoroalkyl group, and preferably a perfluoroalkyl group. The fluoroalkyl group may be linear, branched or cyclic.

The number of carbon atoms in the fluoroalkyl group is preferably from 1 to 8, and particularly preferably from 4 to 8.

In Formula II, Q¹⁰ is a divalent linking group.

Specific examples of the divalent linking group include a divalent hydrocarbon group which may have one or more groups selected from the group consisting of -O-, -S-, -C(O)- and -N(R¹¹)- between carbon-carbon atoms, -O-, -S-, -C(O)O-,-C(O)-, -C(O)-N(R¹²)-, and a group in which two or more of these groups are combined. R¹¹ and R¹² are each independently a hydrogen atom or a monovalent hydrocarbon group. The definition of the monovalent hydrocarbon group is the same as for R in Formula I above.

Preferred modes of the divalent hydrocarbon group are the same as for Q in Formula I above. However, the number of carbon atoms in the divalent hydrocarbon group is preferably from 1 to 6, and particularly preferably from 2 to 6.

Among these, the divalent linking group is preferably a divalent hydrocarbon group, and more preferably an ethylene group.

In Formula II, L¹⁰ is a hydrolyzable group. The definition of the hydrolyzable group is the same as for L in Formula I above.

In Formula II, in the case where there is two or more L¹⁰s, the two or more L¹⁰s may be the same as or different from each other.

In Formula II, R¹⁰ is a hydrogen atom or a monovalent hydrocarbon group. The definition of the monovalent hydrocarbon group is the same as for R in Formula I above.

In Formula II, in the case where there is two or more R¹⁰s, the two or more R¹⁰s may be the same as or different from each other.

p1 is an integer of from 1 to 3, preferably 2 or 3, and particularly preferably 3, from the viewpoint of a reaction rate.

The fluoroalkylsilane having a hydrolyzable group may be used alone or in a combination of two or more kinds thereof.

The zirconium compound having a hydrolyzable group is a component optionally used as the hydrolyzable compound. The use of the zirconium compound having a hydrolyzable group further improves the alkali resistance of the glass substrate with a silica film.

Specific examples of the zirconium compound having a hydrolyzable group include zirconium tetra-normal-propoxide, a zirconium octylate compound, and zirconium stearate.

The zirconium compound having a hydrolyzable group may be used alone or in a combination of two or more kinds thereof.

A hydrolyzate of the hydrolyzable compound means a compound obtained by hydrolyzing the hydrolyzable group in the hydrolyzable compound. The above hydrolyzate may be one in which all of the hydrolyzable groups are hydrolyzed (complete hydrolyzate), or one in which a part of the hydrolyzable groups are hydrolyzed (partial hydrolyzate). That is, the hydrolyzate may be a complete hydrolyzate, a partial hydrolyzate, or a mixture thereof.

In addition, the hydrolysis condensation compound of the hydrolyzable compound means a compound obtained by hydrolyzing the hydrolyzable group in the hydrolyzable compound and condensing the obtained hydrolyzate. The hydrolysis condensation compound may be one in which all hydrolyzable groups are hydrolyzed and the whole hydrolyzate is condensed (complete hydrolysis condensation compound), or one in which a part of the hydrolyzable groups are hydrolyzed and a part of the hydrolyzate is condensed (partial hydrolysis condensation compound). That is, the hydrolysis condensation compound may be a complete hydrolysis condensation compound, a partial hydrolysis condensation compound, or a mixture thereof. In addition, the hydrolysis condensation compound may be a hydrolysis condensation compound obtained by condensing hydrolyzates of two or more of the hydrolyzable compounds with each other.

### (Silica Particle and Zirconia Particle)

The silica particle is a particle containing silica (SiO₂), and the zirconia particle is a particle containing zirconia (ZrO₂).

Specific examples of the shape of the silica particle and the zirconia particle include spherical, elliptical, needlelike, plate-like, rod-like, conical, cylindrical, cubic, rectangular parallelepiped, diamond-like, star-like, and irregular shapes.

The silica particle and the zirconia particle may be a solid particle, a hollow particle, or a porous particle. The "solid particle" mean the particle that does not have internal cavity. The "hollow particle" means the particle having cavity therein. The "porous particle" mean the particle having a plurality of pores on the surface.

The silica particle and the zirconia particle may each exist in an independent state, each particle may be linked in a chain-like manner, or each particle may be agglomerated.

The average aggregate particle size of the silica particle and the zirconia particle is preferably from 5 nm to 100 nm, and particularly preferably from 5 nm to 50 nm, from the viewpoint of more excellent effects of the present invention.

The average aggregate particle size of the silica particle and the zirconia particle means a volume-based cumulative 50% diameter (D50) measured using a laser diffraction particle size distribution analyzer.

As the silica particle, commercially available product may be used, for example, SNOWTEX series manufactured by Nissan Chemical Corporation is mentioned.

The silica particle may be used alone or in a combination of two or more kinds thereof.

As the zirconia particle, commercially available product may be used, for example, BIRAL series manufactured by TAKI CHEMICAL CO., LTD. is mentioned.

The zirconia particle may be used alone or in a combination of two or more kinds thereof.

There are no particular restrictions on the proper use of the silica particle and the zirconia particle. In the case of using the zirconia particle, due to the high sinterability of the zirconia particle, it is possible to solve the problem of cracks that are likely to occur when a glass substrate with a silica film is subjected to a heat treatment at a higher temperature, and to make the silica film more dense, so that high durability performance is likely to be obtained in the substrate with a silica film.

### (Metal Catalyst)

The silica film-forming composition preferably includes a metal catalyst from the viewpoint of promoting hydrolysis and condensation of the hydrolyzable compound.

Specific examples of the metal catalyst include: aluminum chelate compounds such as aluminum acetylacetonate, aluminum bisethylacetoacetate monoacetylacetonate, aluminum-di-n-butoxide monoethylacetoacetate, aluminum-di-isopropoxide monomethylacetoacetate, and diisopropoxyaluminum ethylacetate; titanium chelate compounds such as titanium acetylacetonate and titanium tetraacetylacetonate; copper chelate compounds such as copper acetylacetonate; cerium chelate compounds such as cerium acetylacetonate; chromium chelate compounds such as chromium acetylacetonate; cobalt chelate compounds such as cobalt acetylacetonate; tin chelate compounds such as tin acetylacetonate; iron chelate compounds such as iron (III) acetylacetonate; manganese chelate compounds such as manganese acetylacetonate; nickel chelate compounds such as nickel acetylacetonate; zinc chelate compounds such as zinc acetylacetonate; zirconium chelate compounds such as zirconium acetylacetonate; and organic tin compounds such as dialkyltin.

Among these, the metal catalyst is preferably an aluminum chelate compound, and particularly preferably aluminum acetylacetonate, from the viewpoint of promoting hydrolysis and condensation of the hydrolyzable compound.

The metal catalyst may be used alone or in a combination of two or more kinds thereof.

### (Liquid Medium)

The silica film-forming composition preferably contains a liquid medium. The liquid medium is preferably a solvent that dissolves or disperses the hydrolyzable compound and disperses the silica particle and the zirconia particle in the composition.

Specific examples of the liquid medium include organic solvents such as alcohols, ketones, ethers, cellosolves, esters, glycol ethers, nitrogen-containing compounds and sulfur-containing compounds, and water.

Specific examples of the alcohols include methanol, ethanol, isopropanol, 1-butanol, 2-butanol, isobutanol and diacetone alcohol.

Specific examples of the ketones include acetone, methyl ethyl ketone, and methyl isobutyl ketone.

Specific examples of the ethers include tetrahydrofuran and 1,4-dioxane.

Specific examples of the cellosolves include methyl cellosolve, ethyl cellosolve, and butyl cellosolve.

Specific examples of the esters include methyl acetate and ethyl acetate.

Specific examples of the glycol ethers include ethylene glycol monoalkyl ethers.

Specific examples of the nitrogen-containing compounds include N,N-dimethylacetamide, N,N-dimethylformamide, and N-methylpyrrolidone.

Specific examples of the sulfur-containing compounds include dimethyl sulfoxide.

The liquid medium may be used alone or in a combination of two or more kinds thereof.

From the viewpoint of hydrolysis of the hydrolyzable compound, the liquid medium preferably consists of water or is a mixed solvent containing water and an organic solvent.

In the case of using a mixed solvent containing water and an organic solvent, alcohols are preferred as the organic solvent.

### (Other Components)

The silica film-forming composition may contain other components than those mentioned above. Specific examples of other components include silicone oil, a surfactant, a pH adjuster (e.g., acids and alkalis), and an antifoaming agent.

### (Content)

In the silica film-forming composition, the content of the tetraalkoxysilane in terms of SiO₂ is from 2 mass% to 35 mass% with respect to the total content of the content of the tetraalkoxysilane in terms of SiO₂, the content of the compound I in terms of SiO₂, and the content of the at least one kind selected from the group consisting of a silica particle and a zirconia particle in terms of SiO₂, in terms of ZrO₂, or in terms of SiO₂ and ZrO₂. The content is preferably 5 mass% or more, more preferably 7 mass% or more, and particularly preferably 15 mass% or more, from the viewpoint of more excellent wear resistance of the glass substrate with a silica film, and is preferably 30 mass% or less, and particularly preferably 20 mass% or less, from the viewpoint of more excellent alkali resistance and salt water resistance of the glass substrate with a silica film.

In the silica film-forming composition, the content of the compound I in terms of SiO₂ is from 15 mass% to 88 mass% with respect to the total content of the content of the tetraalkoxysilane in terms of SiO₂, the content of the compound I in terms of SiO₂, and the content of the at least one kind selected from the group consisting of a silica particle and a zirconia particle in terms of SiO₂, in terms of ZrO₂, or in terms of SiO₂ and ZrO₂. The content is preferably 20 mass% or more, more preferably 25 mass% or more, and particularly preferably 30 mass% or more, from the viewpoint of more excellent alkali resistance and salt water resistance of the glass substrate with a silica film, and is preferably 60 mass% or less, more preferably 55 mass% or less, and particularly preferably 50 mass% or less, from the viewpoint of more excellent wear resistance of the glass substrate with a silica film.

In the silica film-forming composition, the content of the at least one kind selected from the group consisting of a silica particle and a zirconia particle in terms of SiO₂, in terms of ZrO₂, or in terms of SiO₂ and ZrO₂ is from 10 mass% to 60 mass% with respect to the total content of the content of the tetraalkoxysilane in terms of SiO₂, the content of the compound I in terms of SiO₂, and the content of the at least one kind selected from the group consisting of a silica particle and a zirconia particle in terms of SiO₂, in terms of ZrO₂, or in terms of SiO₂ and ZrO₂. The content is preferably 30 mass% or more, more preferably 32 mass% or more, and particularly preferably 35 mass% or more, from the viewpoint of more excellent wear resistance of the glass substrate with a silica film, and is preferably 50 mass% or less, more preferably 48 mass% or less, and particularly preferably 45 mass% or less, from the viewpoint of more excellent alkali resistance and salt water resistance of the glass substrate with a silica film.

In the case where the silica film-forming composition includes the fluoroalkylsilane having a hydrolyzable group, in the silica film-forming composition, with respect to the total content of the content of the tetraalkoxysilane in terms of SiO₂, the content of the compound I in terms of SiO₂, the content of the at least one kind selected from the group consisting of a silica particle and a zirconia particle in terms of SiO₂, in terms of ZrO₂, or in terms of SiO₂ and ZrO₂, and the content of the fluoroalkylsilane having a hydrolyzable group in terms of SiO₂, the content of the fluoroalkylsilane having a hydrolyzable group in terms of SiO₂ is preferably 0.1 mass% or more and particularly preferably 0.5 mass% or more from the viewpoint of more excellent wear resistance of the glass substrate with a silica film, and is preferably 5 mass% or less and particularly preferably 3 mass% or less from the viewpoint of more excellent alkali resistance and salt water resistance of the glass substrate with a silica film.

In the case where the silica film-forming composition includes the zirconium compound having a hydrolyzable group, in the silica film-forming composition, with respect to the total content of the content of the tetraalkoxysilane in terms of SiO₂, the content of the compound I in terms of SiO₂, the content of the at least one kind selected from the group consisting of a silica particle and a zirconia particle in terms of SiO₂, in terms of ZrO₂, or in terms of SiO₂ and ZrO₂, and the content of the zirconium compound having a hydrolyzable group in terms of ZrO₂, the content of the zirconium compound having a hydrolyzable group in terms of ZrO₂ is preferably 0.1 mass% or more and particularly preferably 0.3 mass% or more from the viewpoint of more excellent alkali resistance and salt water resistance of the glass substrate with a silica film, and is preferably 6 mass% or less and particularly preferably 4 mass% or less from the viewpoint of more excellent wear resistance of the glass substrate with a silica film.

In the case where the silica film-forming composition includes the metal catalyst, the content of the metal catalyst is preferably from 0.01 mass% to 5 mass% and particularly preferably from 0.1 mass% to 3 mass% with respect to the total content of the content of the tetraalkoxysilane in terms of SiO₂, the content of the compound I in terms of SiO₂, the content of the at least one kind selected from the group consisting of a silica particle and a zirconia particle in terms of SiO₂, in terms of ZrO₂, or in terms of SiO₂ and ZrO₂, and the content of the fluoroalkylsilane having a hydrolyzable group, which is optionally used, in terms of SiO₂.

In the case where the silica film-forming composition includes the other components described above, the content of the other components is preferably from 0.1 mass% to 3 mass% and particularly preferably from 0.5 mass% to 2 mass% with respect to the total content of the content of the tetraalkoxysilane in terms of SiO₂, the content of the compound I in terms of SiO₂, the content of the at least one kind selected from the group consisting of a silica particle and a zirconia particle in terms of SiO₂, in terms of ZrO₂, or in terms of SiO₂ and ZrO₂, and the content of the fluoroalkylsilane having a hydrolyzable group, which is optionally used, in terms of SiO₂.

In the case where the silica film-forming composition includes the liquid medium, the content of the liquid medium is preferably from 86.0 mass% to 99.5 mass%, and particularly preferably from 88.5 mass% to 99.0 mass%, with respect to the total mass of the silica film-forming composition.

### (Preparation Method)

The silica film-forming composition can be produced by mixing at least one kind selected from the group consisting of a hydrolyzable compound, a hydrolyzate thereof, a hydrolysis condensation compound thereof, and at least one kind selected from the group consisting of a silica particle and a zirconia particle, and optional components (such as a metal catalyst and a liquid medium).

### [Application]

The application of the glass substrate with a silica film 1A is not particularly limited, and examples thereof include transparent parts for vehicles (such as a headlight cover, a side mirror, a front transparent substrate, a side transparent substrate, a rear transparent substrate, and an instrument panel surface), meters, architectural windows, show windows, displays (such as a laptop computer, a monitor, LCD, PDP, ELD, CRT, and PDA), LCD color filters, touch panel substrates, pickup lenses, optical lenses, spectacle lenses, camera parts, video parts, CCD cover substrates, optical fiber end surfaces, projector parts, multifunction printer parts, transparent substrates for solar cells (such as cover glass), mobile phone windows, backlight unit parts (such as a light guide plate and a cold cathode tube), liquid crystal brightness enhancement films, organic EL light-emitting element parts, inorganic EL light-emitting element parts, phosphor light-emitting element parts, optical filters, end surfaces of optical parts, lighting lamps, covers for lighting fixtures, and amplified laser light sources

### [Method for Producing Glass Substrate with a Silica Film]

Examples of a method for producing the glass substrate with a silica film 1A include a method of forming the silica film 20 on the glass substrate 10 by coating the glass substrate 10 with the silica film-forming composition described above and performing drying if necessary.

Examples of the coating method include wet coating methods such as a spin coating method, a spray coating method, a dip coating method, a die coating method, a curtain coating method, a screen coating method, an inkjet method, a flow coating method, a gravure coating method, a bar coating method, a flexo coating method, a slit coating method, and a roll coating method.

The drying may be performed by heating, or may be performed by natural drying or air drying without heating.

The drying temperature is preferably 50°C or higher, and particularly preferably 100°C or higher, from the viewpoint of excellent hardness of the silica film.

The drying time may be appropriately set according to the drying temperature, the size of the glass substrate, and the like, and is preferably 5 minutes or longer, and particularly preferably 10 minutes or longer.

### [Other Modes]

FIG. 1 shows an example in which the glass substrate 10 and the silica film 20 are in contact with each other, but the present invention is not limited to this. The glass substrate with a silica film according to the present invention may include another layer between the glass substrate 10 and the silica film 20, as shown in FIG. 2.

FIG. 2 is a cross-sectional view schematically illustrating an example of the glass substrate with a silica film according to the present invention. The glass substrate with a silica film 1B according to the present mode include the glass substrate 10, a heat ray reflection film 30A formed on one surface of the glass substrate 10, and the silica film 20 formed on the surface of the heat ray reflection film 30A opposite to the glass substrate 10.

The heat ray reflection film 30A includes a first dielectric layer 31, a first silver-containing layer 32 and a second dielectric layer 33 in order from a glass substrate 10 side.

In the example shown in FIG. 2, the heat ray reflection film 30A is formed on the entire one surface of the glass substrate 10, but the present invention is not limited to this. The heat ray reflection film 30A may be formed only on a partial region of the glass substrate 10.

In the following, each member included in the glass substrate with a silica film 1B will be described.

Since the glass substrate with a silica film 1B is the same as the above-described glass substrate with a silica film 1A except for the heat ray reflection film 30A, the description of the members described in the glass substrate with a silica film 1A is omitted.

### <Heat Ray Reflection Film>

In this mode, the heat ray reflection film 30A is disposed between the glass substrate 10 and the silica film 20. The heat ray reflecting film 30A can improve the heat shielding property of the glass substrate with a silica film 1B.

The heat ray reflection film 30A includes the first dielectric layer 31, the first silver-containing layer 32, and the second dielectric layer 33 in this order along the thickness direction thereof.

The thickness of the heat ray reflection film 30A is preferably from 15 nm to 565 nm, more preferably from 25 nm to 460 nm, and particularly preferably from 30 nm to 390 nm, from the viewpoint of a more excellent heat shielding property and design of the glass substrate with a silica film 1B.

The thickness of the heat ray reflection film 30A can be calculated by totaling the thicknesses of respective layers constituting the heat ray reflection film 30A. Further, the thickness of respective layers constituting the heat ray reflection film 30A is obtained by the method described in the Examples to be described later.

### (Silver-containing Layer)

The first silver-containing layer 32 is a layer containing silver, and the action of silver can further improve the heat shielding property of the glass substrate with a silica film 1B.

Here, silver contained in the first silver-containing layer 32 is likely to corrode in direct contact with the outside air, but since the glass substrate with a silica film 1B includes the silica film 20, corrosion of silver can be prevented. Accordingly, the glass substrate with a silica film 1B can maintain excellent heat shielding performance.

The first silver-containing layer 32 may contain a metal other than silver (hereinafter also referred to as "other metals"). Specific examples of other metals include at least one metal selected from the group consisting of palladium, gold, chromium, cobalt, nickel, copper, and titanium.

The other metals may be used alone or in a combination of two or more kinds thereof.

The content of silver in the first silver-containing layer 32 is preferably 100 mass%.

However, in the case where the first silver-containing layer 32 contains other metals, the content of silver is preferably 50 mass% or more, more preferably 65 mass% or more, and particularly preferably 80 mass% or more, with respect to the total mass of the first silver-containing layer 32 from the viewpoint of the heat shielding property. In the case where the first silver-containing layer 32 contains other metals, the content of silver contained in the first silver-containing layer 32 is preferably 99 mass% or less, and particularly preferably 97 mass% or less, with respect to the total mass of the first silver-containing layer 32. The content of other metals is preferably from 1 mass% to 30 mass%, and particularly preferably from 1 mass% to 20 mass%, with respect to the total mass of the first silver-containing layer 32.

The thickness of the first silver-containing layer 32 is preferably from 5 nm to 30 nm, and particularly preferably from 7 nm to 25 nm, from the viewpoint of the heat shielding property.

The example in FIG. 2 shows the case where the heat ray reflection film includes one silver-containing layer, but the number of silver-containing layers is not limited to this. The heat ray reflection film may include two or more silver-containing layers.

In the case where the heat ray reflection film includes a plurality of silver-containing layers, the total thickness of the silver-containing layers is preferably from 10 nm to 60 nm, and particularly preferably from 14 nm to 50 nm, from the viewpoint of the heat shielding property and design of the glass substrate with a silica film.

### (Dielectric Layer)

The first dielectric layer 31 and the second dielectric layer 33 are preferably disposed to sandwich the silver-containing layer. These dielectric layers have the function of reducing the reflectance or improving the film quality of the silver-containing layer.

Examples of a material constituting each dielectric layer include dielectrics containing at least one kind selected from the group consisting of an oxide, a nitride and an oxynitride of a metal. Specific examples of the metal include zinc, tin, titanium, silicon, aluminum, chromium, nickel, niobium, and alloys thereof.

The material constituting each dielectric layer may be doped with an additive substance. Specific examples of the additive substance include at least one kind selected from the group consisting of an oxide, a nitride, and an oxynitride of tin, aluminum, chromium, titanium, silicon, boron, magnesium, zirconium, and gallium.

Among these, the material constituting each dielectric layer is preferably a nitride and an oxide, and particularly silicon nitride (SiN) and zinc oxide (ZnO).

The thicknesses of each of the first dielectric layer 31 and the second dielectric layer 33 is preferably from 5 nm to 120 nm, and particularly preferably from 10 nm to 100 nm, from the viewpoint of adjusting optical characteristics.

The example in FIG. 2 shows the case where the heat ray reflection film includes two dielectric layers, but the number of dielectric layers is not limited to this. The heat ray reflection film may include three or more dielectric layers.

In the case where the heat ray reflection film includes a plurality of dielectric layers, the total thickness of the dielectric layers is preferably from 10 nm to 400 nm, and particularly preferably from 20 nm to 350 nm, from the viewpoint of adjusting optical characteristics.

### (Other Layers)

The example in FIG. 2 shows the case where the heat ray reflection film includes the silver-containing layer and the dielectric layers. The heat ray reflection film may include layer other than these layers (hereinafter also referred to as "other layer").

Specific examples of other layer include a barrier layer. The barrier layer can be provided to stabilize the silver-containing layer or to prevent oxidation of the silver-containing layer during formation of the dielectric layer. In this case, the barrier layer is disposed between the dielectric layer and the silver-containing layer.

Specific examples of a material constituting the barrier layer include a nickel-chromium alloy, titanium, a zincaluminum alloy, and an oxide thereof, and a nickel-chromium alloy is preferred.

The heat ray reflection film may include only one barrier layer, or may include two or more barrier layers.

The thickness of the barrier layer is preferably from 0.1 nm to 15 nm, and particularly preferably from 0.5 nm to 10 nm.

### (Modification)

FIG. 2 shows a mode in which the heat ray reflection film includes only one silver-containing layer, but the present invention is not limited to this. The heat ray reflection film may include two or more silver-containing layers.

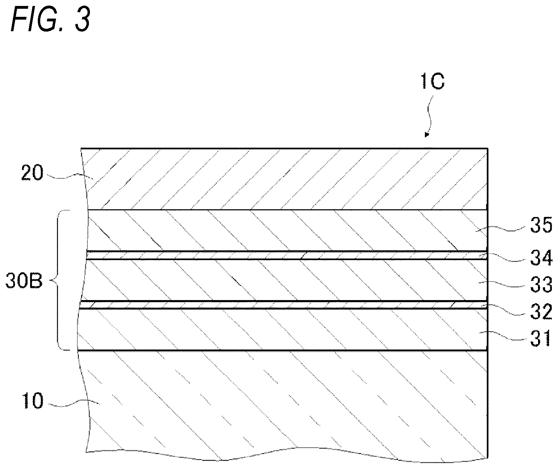

A specific example of the case where the heat ray reflection film includes two or more silver-containing layers is a mode shown in FIG. 3.

FIG. 3 is a cross-sectional view schematically illustrating an example of the glass substrate with a silica film according to the present invention. The glass substrate with a silica film 1C in this mode include the glass substrate 10, a heat ray reflection film 30B formed on one surface of the glass substrate 10, and the silica film 20 formed on the surface of the heat ray reflection film 30B opposite to the glass substrate 10.

The heat ray reflection film 30B includes the first dielectric layer 31, the first silver-containing layer 32, the second dielectric layer 33, a second silver-containing layer 34, and a third dielectric layer 35 in order from the glass substrate 10 side.

In the example shown in FIG. 3, the heat ray reflection film 30B is formed on the entire one surface of the glass substrate 10, but the present invention is not limited to this. The heat ray reflection film 30B may be formed only on a partial region of the glass substrate 10.

Since the glass substrate with a silica film 1C is the same as the above-described glass substrate with a silica film 1B except that it includes the heat ray reflection film 30B instead of the heat ray reflection film 30A, the description of the members described in the glass substrate with a silica film 1B is omitted.

The second silver-containing layer 34 in the heat ray reflection film 30B is the same as the first silver-containing layer 32 in the heat ray reflection film 30A, except that the formation position is different.

The third dielectric layer 35 in the heat ray reflection film 30B is the same as the first dielectric layer 31 and the second dielectric layer 33 in the heat ray reflection film 30A, except that the formation position is different.

The example in FIG. 3 shows the case where the heat ray reflection film includes the silver-containing layers and the dielectric layers. The heat ray reflection film may include other layers such as a barrier layer as in FIG. 2.

### (Thickness Ratio)

In the case where the heat ray reflection film includes a silver-containing layer and an upper layer consisting of all the layers disposed closer to the silica film than the silver-containing layer, the ratio of the thickness of the silica film to the thickness of the upper layer (silica film thickness/upper layer thickness) is preferably from 0.5 to 30, more preferably from 0.7 to 20, and particularly preferably from 1 to 10. In the case where the thickness ratio is 30 or less, the emissivity of the glass substrate with a silica film can be reduced, so that the heat shielding performance is further improved. In the case where the thickness ratio is 0.5 or more, the alkali resistance and the wear resistance are more excellent.

Here, the upper layer is a general term for layers disposed closer to the silica film than the silver-containing layer, and corresponds to the second dielectric layer 33 in the example in FIG. 2. In addition, in the example in FIG. 3, the upper layer corresponds to the third dielectric layer 35.

In the case where there are a plurality of layers disposed closer to the silica film than the silver-containing layer, the plurality of layers are included in the upper layer. Therefore, the thickness of the upper layer means the thickness of only one layer in the case where the upper layer contains only one layer, and means the total thickness of layers in the case where the upper layer includes two or more layers.

### (Physical Properties)

The glass substrate with a silica film 1B and the glass substrate with a silica film 1C are not scratched after a wear test described below.

### ·Wear Test Method

A cotton cloth is attached to a rubbing tester contact (TYPE30S, contact area: 2 cm × 2 cm = 4 cm², manufactured by HEIDON), and the contactor is horizontally reciprocated 5,000 times on the surface of the silica film on the glass substrate with a silica film at a pressure of 19.6 × 10⁻² MPa. The part rubbed with the cotton cloth is irradiated with transmitted light, and the presence or absence of scratches is visually confirmed.

After an alkali test described below, the glass substrate with a silica film 1B and the glass substrate with a silica film 1C preferably have a haze value of 0.4% or less, more preferably have a haze value of 0.3% or less, the haze value being measured in accordance with JIS K7136:2000, and it is particularly preferred that no white turbidity is visually observed.

### ·Alkali Test Method

The glass substrate with a silica film is immersed in a 0.1N sodium hydroxide aqueous solution adjusted to 23±2°C for 6 hours, washed with pure water, and dried by air blowing. After drying, the test part is irradiated with light, and the degree of occurrence of white turbidity is visually confirmed. Further, the haze value is measured in accordance with JIS K7136:2000.

The emissivity of the glass substrate with a silica film 1B and the glass substrate with a silica film 1C is preferably from 0.01 to 0.35, more preferably from 0.01 to 0.25, and particularly preferably from 0.01 to 0.15, from the viewpoint of improving the heat shielding performance of the glass substrate with a silica film.

The method for measuring the emissivity is as described in Examples below.

### <Method for Producing Glass Substrate with a Silica Film>

Examples of the method for producing the glass substrate with a silica film 1B include a method of forming layers constituting the heat ray reflection film 30A in order on the glass substrate 10, then coating the heat ray reflection film 30A with the silica film-forming composition described above, performing drying if necessary, and forming the heat ray reflection film 30A and the silica film 20 in order on the glass substrate 10.

The method for forming layers constituting the heat ray reflection film 30A is not particularly limited, and examples thereof include physical vapor deposition methods (e.g., a vacuum vapor deposition method, an ion plating method, and a sputtering method), chemical vapor deposition methods (e.g., a thermal CVD method, a plasma CVD method, and an optical CVD method), and an ion beam sputtering method.

The method for producing the glass substrate with a silica film 1C is the same as the method for producing the glass substrate with a silica film 1B except that layers constituting the heat ray reflection film 30B are formed in order.

### Examples

The present invention will be described in detail below with reference to Examples. Examples 1 to 6 and 10 are Examples, and Examples 7 to 9 are Comparative Examples. However, the present invention is not limited to these examples.

### [Measurement of Thickness of Silica Film]

A silica film was formed on one surface of a soda-lime glass sheet under the conditions in each example described later. The reflectance of the silica film was measured with a spectrophotometer (U-4100 manufactured by Hitachi High-Tech Corporation) in the wavelength range of from 300 nm to 780 nm with a black vinyl tape attached to the other side of the soda-lime glass sheet on which the silica film was not formed.

A refractive index n was calculated according to the following equation (1) based on the obtained lowest reflectance (bottom reflectance: Rmin) and a refractive index nₛ of a soda-lime glass sheet not attached with a film, and then a thickness d of the silica film was calculated according to the following equation (2) based on the obtained refractive index n and a wavelength λ (nm) at the bottom reflectance (Rmin).

Rmin = (n-nₛ)²/(n+nₛ)² (1)

n × d = λ/4 (2)

### [Measurement of Emissivity]

The emissivity of the glass substrate with a silica film in each example was measured using an emissivity meter (D and S AERD manufactured by KYOTO ELECTRONICS MANUFACTURING CO., LTD.). The results are shown in Table 1.

### [Alkali Resistance Evaluation Test]

The glass substrate with a silica film in each example was immersed in 0.1N sodium hydroxide aqueous solution adjusted to 23±2°C for 6 hours, washed with pure water, and dried by air blowing.

After drying, the test part was irradiated with light, the degree of occurrence of white turbidity was visually confirmed, and the alkali resistance was evaluated in accordance with the following criteria. Further, the haze value was measured using Haze Gard i (manufactured by BYK-Gardner). The results are shown in Table 1.
AA: no white turbidity is observed.
A: some white turbidity is observed.
B: white turbidity is observed on the entire surface.

### [Salt Water Resistance Evaluation Test]

The glass substrate with a silica film in each example was immersed in 5% sodium chloride aqueous solution adjusted to 50±2°C for 24 hours, washed with pure water, and dried by air blowing.

The glass substrate with a silica film after drying was visually observed, and the salt water resistance was evaluated in accordance with the following criteria. The results are shown in Table 1.
A: no change in appearance
B: changes in appearance (light spots and unevenness occur)

### [Wear Resistance Evaluation Test]

A cotton cloth was attached to a rubbing tester contact (TYPE30S, contact area: 2 cm × 2 cm = 4 cm², manufactured by HEIDON), and the contactor was horizontally reciprocated on the surface of the silica film on the glass substrate with a silica film in each example at a pressure of 19.6 × 10⁻² MPa.

After 5,000 reciprocation, the part rubbed with the cotton cloth was irradiated with light, and the presence or absence of scratches was confirmed using transmitted light, and the wear resistance was evaluated in accordance with the following criteria. The results are shown in Table 1.
A: no scratches
B: scratches are presence

### [Preparation of Silica Film-forming Composition A]

While stirring 73.67 g of denatured ethanol (trade name "SOLMIXAP-11", manufactured by Japan Alcohol Trading CO., LTD), 23.6 g of ion-exchanged water and 0.01 g of aluminum acetylacetonate were added and stirred for 5 minutes.

To the obtained mixture, 0.17 g of tetraethoxysilane, 0.81 g of bis(trimethoxysilyl)hexane, and 1.75 g of a silica particle dispersion liquid (trade name "SNOWTEX OS" manufactured by Nissan Chemical Corporation, content in terms of SiO₂: 20 mass%) were added and stirred at room temperature for 30 minutes, to thereby prepare a silica film-forming composition A.

In the silica film-forming composition A, the contents of tetraethoxy silane, bis(trimethoxysilyl)hexane, and the silica particles in terms of SiO₂ were respectively 7 mass%, 43 mass%, and 50 mass%, with respect to the total content of tetraethoxysilane, bis(trimethoxysilyl)hexane, and the silica particles in terms of SiO₂.

### [Preparation of Silica Film-forming Compositions B to F]

Silica film-forming compositions B to F were each obtained in the same manner as in Preparation of Silica Film-forming Composition A except that the amounts of components used were adjusted such that the contents of tetraethoxysilane, bis(trimethoxysilyl)hexane, and the silica particles in terms of SiO₂ with respect to the total content of tetraethoxysilane, bis(trimethoxysilyl)hexane, and the silica particles in terms of SiO₂ were as shown in Table 1.

### [Preparation of Silica Film-forming Composition G]

While stirring 73.67 g of denatured ethanol (trade name "SOLMIX AP-11 ", manufactured by Japan Alcohol Trading CO., LTD), 23.6 g of ion-exchanged water, and 0.01 g of aluminum acetylacetonate were added and stirred for 5 minutes.

To the obtained mixture, 0.84 g of tetraethoxysilane, 0.28 g of bis(trimethoxysilyl)hexane, and 1.75 g of a zirconia particle dispersion liquid (trade name "BIRAL Zr-C20" manufactured by TAKI CHEMICAL CO., LTD., content in terms of ZrO₂: 20 mass%) were added and stirred at room temperature for 30 minutes, to thereby prepare a silica film-forming composition G.

In the silica film-forming composition G, the content of tetraethoxysilane in terms of SiO₂, the content of bis(trimethoxysilyl)hexane in terms of SiO₂, and the content of the zirconia particles in terms of ZrO₂ were respectively 35 mass%, 15 mass%, and 50 mass%, with respect to the total content of the content of tetraethoxysilane in terms of SiO₂, the content of bis(trimethoxysilyl)hexane in terms of SiO₂, and the content of the zirconia particles in terms of ZrO₂.

### [Preparation of Glass Substrate with a Heat Ray Reflection Film]

A soda-lime glass sheet (FL5 manufactured by AGC Inc.) was used as a glass substrate, and, using an in-line sputtering device, a heat ray reflection film was formed on one main surface of the soda-lime glass sheet in order of a SiN layer (30 nm), a NiCr layer (2 nm), a Ag layer (12 nm), a NiCr layer (2 nm), a SiN layer (88 nm), a NiCr layer (1 nm), a Ag layer (14 nm), a NiCr layer (1 nm), and a SiN layer (39 nm), to thereby obtain a d glass substrate with a heat ray reflection film. Numbers in parentheses indicate the thicknesses of the layer. The thickness of each layer was calculated by performing proportional conversion with the input power based on the thickness when the film was formed with the preset input power.

Specifically, the SiN layer was formed by disposing a target mainly including silicon as a sputtering target and performing AC sputtering in an atmosphere containing argon and nitrogen. The NiCr layer was formed by disposing a target mainly including a nickel-chromium alloy as a sputtering target and performing DC sputtering in an argon atmosphere. The Ag layer was formed by disposing a target mainly including silver as a sputtering target and performing DC sputtering in an argon atmosphere. The SiN layer is a dielectric layer, the NiCr layer is a barrier layer, and the Ag layer is a silver-containing layer.

### [Example 1]

The glass substrate with a heat ray reflection film (size: 100 mm × 100 mm) was washed with pure water and then air-dried.

After air drying, the silica film-forming composition A was dropped onto the surface of the heat ray reflection film of the glass with heat ray reflection film, and a glass substrate with coating film on which a coating film of the silica film-forming composition A was formed was prepared by a spin coating method (shaking rotation speed: 300 rpm).

The glass substrate with the coating film was placed into a hot air furnace with the furnace temperature adjusted to 130°C, heated for 10 minutes to cure the coating film, and then cooled at room temperature, to thereby obtain the glass substrate with a silica film in Example 1.

### [Examples 2 to 5 and Examples 7 to 10]

Each of the glass substrate with a silica film in Examples 2 to 5 and Examples 7 to 10 were prepared in the same manner as in Example 1 except that the silica film-forming composition shown in Table 1 was used instead of the silica film-forming composition A and the coating conditions were adjusted such that the thickness of the silica film was the value shown in Table 1.

### [Example 6]

The glass substrate with a silica film in Example 6 was prepared in the same manner as in Example 1 except that a soda-lime glass sheet was used instead of the glass substrate with a heat ray reflection film.

### [Evaluation Result]

Using each of the glass substrate with a silica film in Examples 1 to 10, the various evaluations described above were carried out. The results are shown in Table 1.

In Table 1, "content in terms of SiO₂ (mass%)" means the content of tetraethoxysilane in terms of SiOz, the content of bis(trimethoxysilyl)hexane in terms of SiO₂, and the content of the at least one kind selected from the group consisting of a silica particle and a zirconia particle in terms of SiO₂, in terms of ZrO₂, or in terms of SiO₂ and ZrO₂ with respect to the total content of the content of tetraethoxysilane in terms of SiO₂, the content of bis(trimethoxysilyl)hexane in terms of SiO₂, and the content of the at least one kind selected from the group consisting of a silica particle and a zirconia particle in terms of SiO₂, in terms of ZrO₂, or in terms of SiO₂ and ZrO₂.

In addition, "silica film thickness/upper layer thickness" means the ratio of the thickness of the silica film to the thickness of the upper layer (NiCr layer (1 nm) and SiN layer (39 nm) in the heat ray reflection film).

**[Table 1]**

| | Silica film-formine composition | | | | | Glass substrat e | Silica film thicknes s (nm) | Upper layer thickness (nm) in heat ray reflection film | Silica film thicknes s/upper layer thicknes s | Alkali resistance | | Salt water resistance | Wear resistance | Emissivity |
|---|---|---|---|---|---|---|---|---|---|---|---|---|---|---|
| | Typ e | Content in terms of SiOz (mass%) | | | | | | | | | | | | |
| | | Tetraalkoxysilan e | Compoun dI | Silica particles | Zirconia particles | Presenc e or absence of Heat ray reflectio n film | | | | Visual observatio n | Haze value (%) | | | |
| Example 1 | A | 7 | 43 | 50 | 0 | Presenc e | 50 | 40 | 1.25 | AA | 0.1 | A | A | 0.06 |
| Example 2 | B | 35 | 15 | 50 | 0 | Presenc e | 50 | 40 | 1.25 | A | 0.4 | A | A | 0.06 |
| Example 3 | C | 10 | 60 | 30 | 0 | Presenc e | 50 | 40 | 1.25 | AA | 0.2 | A | A | 0.06 |
| Example 4 | A | 7 | 43 | 50 | 0 | Presenc e | 200 | 40 | 5 | AA | 0.2 | A | A | 0.12 |
| Example 5 | A | 7 | 43 | 50 | 0 | Presenc e | 500 | 40 | 12.5 | AA | 0.2 | A | A | 0.18 |
| Example 6 | A | 7 | 43 | 50 | 0 | Absence | 50 | - | - | AA | 0.1 | A | A | 0.88 |
| Example 7 | D | 50 | 0 | 50 | 0 | Presenc e | 50 | 40 | 1.25 | B | 0.9 | B | A | 0.06 |
| Example 8 | E | 45 | 5 | 50 | 0 | Presenc e | 50 | 40 | 1.25 | B | 0.7 | B | A | 0.06 |
| Example 9 | F | 0 | 50 | 50 | 0 | Presenc e | 50 | 40 | 1.25 | A | 0.4 | A | B | 0.06 |
| Example 10 | G | 35 | 15 | 0 | 50 | Presenc e | 50 | 40 | 1.25 | AA | 0.2 | A | A | 0.06 |

As shown in Table 1, in the case where a silica film-forming composition having the content of the tetraalkoxysilane in terms of SiO₂, the content of the compound I in terms of SiO₂, and the content of the at least one kind selected from the group consisting of a silica particle and a zirconia particle in terms of SiO₂, in terms of ZrO₂, or in terms of SiO₂ and ZrO₂ each within a predetermined range is used, it is confirmed that a glass substrate with a silica film having excellent alkali resistance, salt water resistance and wear resistance is obtained (Examples 1 to 6 and 10).

The present application is based on a Japanese Patent Application (No. 2020-123193) filed on July 17, 2020, contents of which are incorporated herein by reference.

### REFERENCE SIGNS LIST

1A, 1B, 1C glass substrate with a silica film
10 glass substrate
20 silica film
30A, 30B heat ray reflection film
31 first dielectric layer
32 first silver-containing layer
33 second dielectric layer
34 second silver-containing layer
35 third dielectric layer

## Claims

1. A glass substrate with a silica film comprising:
a glass substrate; and
a silica film disposed on the glass substrate and formed using a silica film-forming composition, wherein
the silica film-forming composition comprises at least one kind selected from the group consisting of a hydrolyzable compound, a hydrolyzate thereof, and a hydrolysis condensation compound thereof, and at least one kind selected from the group consisting of a silica particle and a zirconia particle,
the hydrolyzable compound consisting of a tetraalkoxysilane, a compound represented by Formula I, optionally a fluoroalkylsilane having a hydrolyzable group, and optionally a zirconium compound having a hydrolyzable group,
a content of the tetraalkoxysilane in terms of SiO₂ is from 2 mass% to 35 mass% with respect to a total content of the content of the tetraalkoxysilane in terms of SiO₂, a content of the compound represented by Formula I in terms of SiO₂, and a content of the at least one kind selected from the group consisting of a silica particle and a zirconia particle in terms of SiO₂, in terms of ZrO₂, or in terms of SiO₂ and ZrO₂,
the content of the compound represented by Formula I in terms of SiO₂ is from 15 mass% to 88 mass% with respect to the total content of the content of the tetraalkoxysilane in terms of SiO₂, the content of the compound represented by Formula I in terms of SiO₂, and the content of the at least one kind selected from the group consisting of a silica particle and a zirconia particle in terms of SiO₂, in terms of ZrO₂, or in terms of SiO₂ and ZrO₂, and
the content of the at least one kind selected from the group consisting of a silica particle and a zirconia particle in terms of SiO₂, in terms of ZrO₂, or in terms of SiO₂ and ZrO₂ is from 10 mass% to 60 mass% with respect to the total content of the content of the tetraalkoxysilane in terms of SiO₂, the content of the compound represented by Formula I in terms of SiOz, and the content of the at least one kind selected from the group consisting of a silica particle and a zirconia particle in terms of SiO₂, in terms of ZrO₂, or in terms of SiO₂ and ZrO₂,
R₃₋ₚ(L)ₚSi-Q-Si(L)ₚR₃₋ₚ Formula I
in Formula I,
R is a hydrogen atom or a monovalent hydrocarbon group optionally having one or more groups selected from the group consisting of -O-, -S-, -C(O)- and -N(R¹)- between carbon atoms, and R¹ is a hydrogen atom or a monovalent hydrocarbon group,
L is a hydrolyzable group,
Q is a divalent hydrocarbon group having from 2 to 6 carbon atoms and optionally having one or more groups selected from the group consisting of -O-, -S-, -C(O)- and -N(R²)- between carbon atoms, and R² is a hydrogen atom or a monovalent hydrocarbon group, and
p is an integer of from 1 to 3.

2. The glass substrate with a silica film according to claim 1, wherein the content of the compound represented by Formula I in terms of SiO₂ is from 30 mass% to 50 mass% with respect to the total content of the content of the tetraalkoxysilane in terms of SiO₂, the content of the compound represented by Formula I in terms of SiO₂, and the content of the at least one kind selected from the group consisting of a silica particle and a zirconia particle in terms of SiO₂, in terms of ZrO₂, or in terms of SiO₂ and ZrO₂.

3. The glass substrate with a silica film according to claim 1 or 2, wherein the silica film-forming composition further comprises a metal catalyst.

4. The glass substrate with a silica film according to any one of claims 1 to 3, further comprising:
a heat ray reflection film between the glass substrate and the silica film.

5. The glass substrate with a silica film according to claim 4, wherein
the heat ray reflection film comprises a silver-containing layer and an upper layer consisting of all layers disposed closer to the silica film than the silver-containing layer, and
a ratio of a thickness of the silica film to a thickness of the upper layer is from 0.5 to 30.
